# EUROPEAN PATENT SPECIFICATION

(11) **EP 3 397 743 B1**
(45) Date of publication and mention of the grant of the patent: **24.03.2021**
(21) Application number: 16738221.7
(22) Date of filing: 17.06.2016
(51) Int. Cl.: C12G 1/02, C12G 1/022, C12G 3/02

(54) **METHODOLOGY FOR PREPARING ETHANOL-REDUCED FERMENTED BEVERAGES**
METHODE ZUR HERSTELLUNG ETHANOL-REDUZIERTER GETRÄNKE
PROCÉDÉ POUR LA PRÉPARATION DE BOISSONS FERMENTÉES À L'ÉTHANOL RÉDUITE

(30) Priority: 28.12.2015 CL 20153744
(43) Date of publication of application: 07.11.2018
(73) Proprietor: Neobiotec S.A., Santa Inés, Viña del Mar (CL)
(72) Inventor: ARANEDA HERRERA, Benjamin Patricio, Santa Inés Viña del Mar (CL); BRICEÑO ROSAS, Cinthia Teresa, Santa Inés Viña del Mar (CL); GARCÍA GONZÁLEZ, Rodrigo Emilio, Santa Inés Viña del Mar (CL); DÍAZ RUIZ, Mauricio Adolfo, Santa Inés Viña del Mar (CL)
(74) Representative: Schulz Junghans Patentanwälte PartGmbB
(86) International application number: PCT/IB2016/053633
(87) International publication number: WO 2017/115156

(56) References cited:
- CN-A- 101 717 707
- CN-A- 104 120 087
- Smith, P. M.: "Biological processes for the reduction of alcohol in wines.", M. Appl. Sci., dissertation, New Zealand: Lincoln University , 1 January 1995 (1995-01-01), XP002761789, Retrieved from the Internet: URL:http://researcharchive.lincoln.ac.nz/h andle/10182/4355 [retrieved on 2016-09-13]
- A. CONTRERAS ET AL: "Evaluation of Non-Saccharomyces Yeasts for the Reduction of Alcohol Content in Wine", APPLIED AND ENVIRONMENTAL MICROBIOLOGY, vol. 80, no. 5, 27 December 2013 (2013-12-27), pages 1670-1678, XP055302266, US ISSN: 0099-2240, DOI: 10.1128/AEM.03780-13
- ERTEN HUSEYIN ET AL: "The production of low-alcohol wines by aerobic yeasts", JOURNAL OF THE INSTITUTE OF BREWING, INSTITUTE OF BREWING. LONDON, GB, vol. 107, no. 4, 1 July 2001 (2001-07-01), pages 207-215, XP008128089, ISSN: 0046-9750
- E. FREDLUND ET AL: "Oxygen- and Glucose-Dependent Regulation of Central Carbon Metabolism in Pichia anomala", APPLIED AND ENVIRONMENTAL MICROBIOLOGY, vol. 70, no. 10, 1 October 2004 (2004-10-01), pages 5905-5911, XP055302051, US ISSN: 0099-2240, DOI: 10.1128/AEM.70.10.5905-5911.2004

## Description

### FIELD OF APPLICATION

The present invention is comprised in the field of food technology, particularly, in the field of wine and fermented-beverages industry.

In particular, a methodology for preparing fermented beverages is provided, where said methodology comprises the use of a group of yeasts, in order to produce sweet, dry or demi-sec beverages reduced in ethanol. In a preferred embodiment of the invention a method and a process for producing alcohol-reduced wine are provided.

### BACKGROUND OF THE INVENTION

Due to the trend of population of choosing a healthy life, and other reasons such as the alcohol controlling law, reluctance on consumers has been generating, mainly caused by high alcohol level of wines currently present in the market, bordering between 14° and 16° v/v of ethanol.Chile ranks eighth in the world ranking as wine producer and fifth as exporter, and its products can be found in 150 countries, generating incomes of more than USD 1,420 million in bottling and USD 327 million in wine in bulk yearly (OIV, 2013).

In recent years significant private and governmental resources have been invested for the generation of wines with low percentages of end alcohol. Nevertheless, the vast majority of these projects are directed to dealcoholize wine through the application of technologies, once it is already made, and shortly before it is bottled. Although these techniques are effective, they are of high cost and modify the organoleptic properties of wine, thus altering its quality and not achieving the expectations of the consumer, and for this reason the respective market still faces a limited growth.

On the other hand, many microorganisms used in vinification have been described up to now; each of them has specific features that provide different sensory properties to the wine, being distinctive of each gender or even of every kind of yeast. Wild yeasts most commonly used in making wine include microorganisms of the genera *Candida, Klöckera*/*Hanseniaspora, Metschnikowiaceae, Pichia y Zygosaccharomyces.* Nevertheless, most cultured yeasts currently used in this fermentation process belong to the species *Saccharomyces,* specifically to *S. cervesiae.*

Unlike Saccharomyces yeasts, non-Saccharomyces ones secrete higher concentration of enzymes to the environment (esterases, glycosidases, lipases, proteases and cellulases mainly) which gradually degrade certain components of the must, thereby improving some technological processes such as color extraction of grape pomace, clarification and body of the wine, thus favoring its organoleptic features, such as the aromatic quality thereof. Some of these non-Saccharomyces yeast seem to have interesting effect on the aroma and taste of alcoholic beverages; furthermore, they generate a low amount of undesirable compounds in the wine, such as acetaldehyde, acetoine, acetic acid and ethyl acetate.

### STATE OF THE ART

World consumption of wine has faced variations throughout history; however, after constant increases in consumption, the increase in production has been possible thanks to innovation, which has provided agricultural and industrial improvements for obtaining different types of wines. Hence, it has been possible to maintain a stable market for decades. The production of wines having a low content of alcohol has been a subject marked by a diverse technological development, which started from 1980 with the study of different methods of manufacturing wine with low alcohol content (1 to 2% of ethanol).

The two technological aspects, which are very well differentiated until today, are clearly marked: the post-fermentation elimination of alcohol and the reduction of the alcohol amount generated during fermentation. Therefore, in the year 1985 one of the first dealcoholization method was introduced, which consists in increasing the temperature of finished wine under very low pressure in order to allow the evaporation of existing ethanol (US19850746075). On the other hand, an invention was introduced, which by previous steps of enzymatic oxidation of the glucose content, turns the same into gluconic acid thus reducing the amount of fermentable sugar in the must and indirectly producing less alcohol (US19860826923). These methods that were in early steps of technological development could be effective to diminish the alcoholic level of wine; however, they affected the aroma thereof and its different organoleptic features, which are very important in a determined wine. Subsequently, in the context of Chile and its consolidation in the wine market, a patent application was filed, which relates to a dealcoholization method by means of an advanced technique that uses high pressures to invest the osmotic potential of a solution and so transfer solvents to the other space separated of a semi-permeable membrane (RO). Nevertheless, this application was declared as abandoned by the absence of participation of inventors (CL patent application No. 1301-1991). There is evidence of subsequent inventions including a process of reverse osmosis that are currently presented as a process of wine dealcoholization (CN203754697). Subsequently, new methods were filed, which executed incomplete fermentations and added different amounts of crude grape juice (known as must for those skilled in the art) in the final stages, so that the present sugar is not metabolized and converted into molecules of ethanol (US6203826, CN101717707). The limitation of this technology is that the resulting product consists of a "sweet" wine and has a marked absence of volatile compounds and secondary metabolites produced in alcoholic fermentation; therefore, the wine was not very well qualified in international competitions.

In the decade following the year 2010, some previously-developed processes were restarted and improved, thus generating the invention filed (CN20131249432) in 2013, where the same enzyme glucose oxidase discussed previously (US19860826923) is used, but it improves the process with inert atmospheric control and aeriation of temperature during the fermentation process, resulting in complete fermentation wines, but they have high contents of gluconic acid, which provides an unpleasant taste on the palate of the tasters. The dealcoholization method has evolved so effectively that one can find inventions with which wines with 0% alcohol may be achieved (CN203653519) by distillation in series and treatment at low pressures with moderately high temperature; however, enological opinion agrees that this kind of fermentation must contain a minimum amount of ethanol in its composition to complete the spectrum of necessary flavors and notes.

On the other hand, the industry began to look after yeast strains with which lower yields of ethanol production could be obtained in a process of complete fermentation. That is how the invention CN103627646 presents a fungal strain capable of generating less ethanol, compared with its wine pairs.

Smith, P.M. ("Biological processes for the reduction of alcohol in wines." M. Appl. Sci., dissertation, New Zealand) discloses a sequential fermentation method for preparing alcohol-reduced wine. In a first step, juice is inoculated with Pichia stipitis or Canadida tropicalis. Biomass growth is performed under aerobic conditions at 30°C; After removal of Pichia stipites or Canadida tropicalis, Saccharomyces cerevisiae is used in a second fermentative stage until fermentation is completed.

Contreras, A. et al. ("Evaluation of Non-Saccharomyces Yeast for the Reduction of Alcohol Content in Wine" (2014), AEM, Vol. 80, No. 5, 1670-1678) also discloses a sequential fermentation method for preparing alcohol-reduced wine comprising the steps of inoculating juice with a Non-Saccharomyces Yeast; biomass growth under aerobic conditions at 22°C; removing the Non-Saccharomyces yeast strain; and carrying out a second fermentative stage at 28°C by inoculating with Saccharomyces cerevisiae.

Erten Huseyin et al. ("The production of low-alcohol wines by aerobic yeasts" (2001)) discloses the use of Pichia anomala strains in wine making procedures.

### BRIEF DESCRIPTION OF THE FIGURES

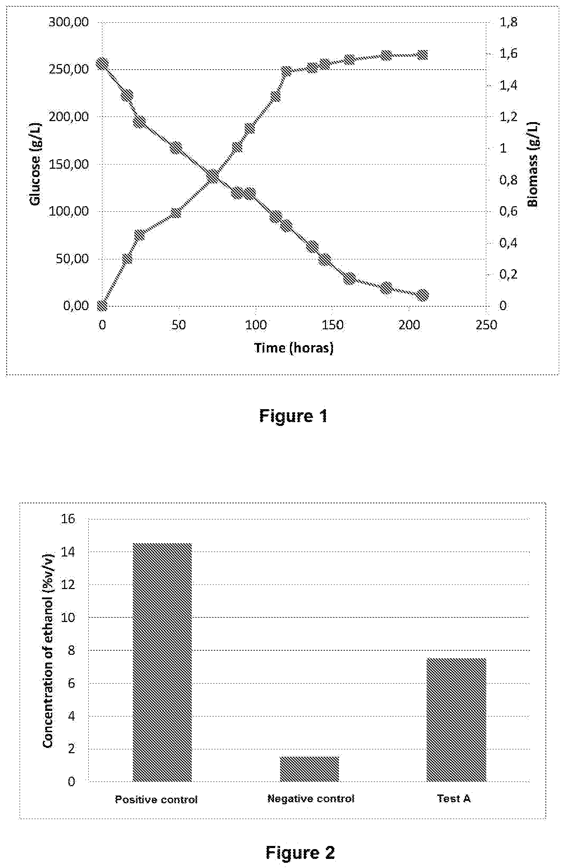

Figure 1 is a graphical demonstration of the kinetics of fermentation obtained from must of Muscat of Alexandria grapes. (●), consumption of glucose. (■), increase of biomass in the inside of the reactor.
Figure 2 represents a comparison of the alcohol content (in % v/v of ethanol) obtained at the end of the process for three different fermentations. The negative control corresponds to most from Alexandria muscatel grape with constant aeration. The positive control corresponds to Moscatel grape without aeration. The test corresponds to a fermentation carried out by the methodology described herein starting from the same must used in the above-described processes.

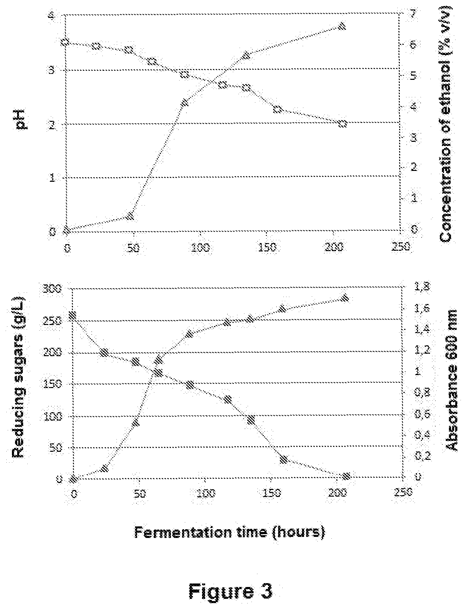

Figure 3 shows the kinetics of fermentation by using concentrated red grape must. (■ ), reducing sugars.(▲), cellular biomass. (□), pH throughout the process. (Δ), concentration of ethanol comprised in the ferment.

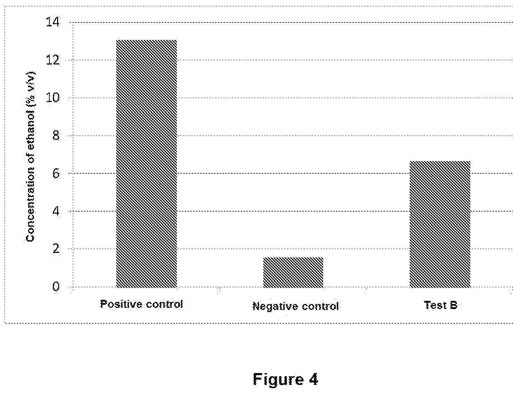

Figure 4 represents a comparison of the alcohol content (in % v/v of ethanol) obtained at the end of the process for three different fermentations. The negative control corresponds to concentrated grape most with constant aeration. The positive control corresponds to concentrated grape must without aeration. The test corresponds to a fermentation carried out by the methodology described herein starting from the same must used in the above-described processes.

### SUMMARY OF THE INVENTION

The present invention represents a generic methodology for preparing wines and other beverages having reduced ethanol content, where said wines or beverages may be sweet, dry or demi-sec beverages. The methodology comprises different fermentation stages, wherein wine yeasts *Pichia anomala y Saccharomyces sp.* are used.

The present invention teaches a methodology, in which yeast groups are used, and said groups are capable of generating several yields of ethanol production by controlling critical variables in the production of an organoleptically acceptable wine through a minor intervention in the aromatic compounds and the final product, resulting in a wine of similar features to those ones available in the market, which has the antioxidant properties and the quality of traditional wines, with lower alcoholic content.

### DETAILED DESCRIPTION OF THE INVENTION

As it is known, according to the above-indicated background, one of the main problems the wine industry is currently facing is the change of preferences of consumers, which increasingly prioritize the intake of beverages with low or no alcohol content.

Considering the importance that the health benefits must be strictly linked to the satisfaction of the tasting, the present invention is worded, which considers both key factors for success in product sales. This innovation is based on the implementation of a fermentation carried out in two differential stages. The first stage consists on a micro-oxygenation process, which promotes the growth of *P. anomala* biomass, metabolizing the glucose by oxidative routes having a minimum production of alcohol. This first oxidative stage of biomass growth is carried out at a temperature of from 12 °C to 19 °C. In the second stage of the fermentation a replacement of the yeast strain is made by removing the *Pichia* ferment and inoculating with *Saccharomyces sp.,* micro-organism that provides the characteristic finish to the wine. This second fermentative stage is carried out at a temperature of from 10 °C to 17 °C. As previously mentioned, non-Saccharomyces yeasts secrete a higher concentration of enzymes to the environment that improve the organoleptic features of fermented beverages, so during the development of the present invention a Pichia anomala yeast strain was used as micro-organism responsible for the primary stage of this methodology. Thus, the methodology suggested herein uses *Pichia anomala,* which is a micro-organism having a behavior strongly influenced by oxygen limitation, and not by the concentration of glucose present in the medium for ethanol production, strongly decreasing the expression of the alcohol dehydrogenase enzyme (EC. 1.1.1.1) under aerobic conditions.

However, despite that *P. anomala* has been used for vinification processes with good results, these have been mostly red wines that lack the characteristic wine finish in the light of oenologists' opinion.

As this is a methodology applicable for all types of wines, including white, rose and red wines, it is of great importance to use in the manufacture process yeast appropriate to this goal. For this reason, in order to implement the final stage of fermentation, a strain of *Saccharomyces sp.* has been chosen as the most suitable for this purpose, so that in the final stage of the methodology a time of fermentation with *Saccharomyces sp.* is involved, microorganism capable of producing intense floral notes that increase wine aromatic complexity.

### Advantages

Unlike existing processes, the present invention provides a fermented beverage that does not require dealcoholization, which allows obtaining a beverage low in alcohol at lower cost, maintaining its organoleptic properties, without reducing the quality thereof.

### Mechanism of action

The present invention comprises differential stages of fermentation in order to be capable of handling the metabolism of the involved micro-organisms by controlling the external variables.

Glucose can be metabolized in yeasts by two different routes: oxidative route or fermentative one. The objective of the methodology of the present invention is to promote the oxidative respiration route, thus promoting the metabolism, which leads to the biomass generation, an increase in cell growth with minimum ethanol production and the generation of other compounds of wine interest. To carry out the above-mentioned process, the application of oxygen in stage I of fermentation is required; thus, *Pichia anomala,* which is a negative Crabtree yeast cultured in aerobic conditions, metabolizes glucose preferably through pyruvate dehydrogenase to acetyl-CoA. Subsequently, this molecule enters the Krebs cycle to its complete oxidation and the consequent generation of energy required for the processes that lead to its duplication (Van Dijken et al., 1993; Gancedo & Serrano 1989). This is due to the fact that under these conditions this molecule shows minimum levels of transcription of the enzyme pyruvate decarboxylase (EC. 4.1.1.1), so the metabolic pathway leading to the formation of ethanol from acetaldehyde is limited (Postma et al., 1989).

Another important feature that influences on the selection of this strain for the aerobic fermentation is that under these growth conditions *P. anomala* generates a high yield of biomass and, furthermore, it is able to generate other important compounds for the organoleptic properties of the wine, such as glycerol and acetate, with a marginal synthesis of ethanol.

One of the last stages of the methodology for the preparation of reduced wine into ethanol consists in an anaerobic fermentation carried out by *Saccharomyces sp.* yeast. This stage is of great enological importance, since this micro-organism provides high concentrations of glycerol, without increasing the acetic acid, and an increase in the production of certain secondary aromas, thus improving the body and flavor of the wine.

### Methodology

### 1. Must processing

After obtaining the must by stemming and crushing the fruit - either if it corresponds to grape juice to produce white, rose or red wine, this shall be stored in a container, for example a metal container, stainless steel, plastic or wood at a temperature between -5°C to 4°C until the use thereof.

If the must is not under aseptic conditions, the necessary treatment should be executed in order to decrease the load of native yeasts that could be comprised in suspension by chemical processes, such as addition of antifungal and antibacterial agents or by physical processes such as microfiltration, centrifugation or decantation.

### 2. Activation of the Pichia anomala strain

In case *Pichia anomala* comes directly from a culture suitable for its growth as liquid or solid YM medium (Yeast extract-Malt extract Medium), YPD (Yeast Extract Peptone Dextrose Medium) or another medium for yeasts supplemented with glycerol 1-10%, it must be collected by any method of decantation, for example, centrifugation, re-suspended and washed with sterile distilled water as many times as necessary. The pellet obtained from the last wash must be moisturized gently in a solution of sodium alginate from 3mM to 7mM, at a range of 20-30°C and pH 4-7. Then it must stand for about 10 to 25 minutes until the use thereof.

### 3. Fermentation - Stage I

This first stage consists on aerobic fermentation. Therefore, an aeration system is mounted, which consists of an external air supply and a diffuser. During the entire process the dissolved oxygen must remain to a concentration of between 0.1-1 vvm. To do this, the flow of air intake to the fermentation vessel must be regulated as the culture becomes denser.

The must shall be inoculated with *Pichia anomala.* The yeast concentration in the must shall be greater than 0.1 g/l and less than 0.4 g/L, preferably 0.25 grams of dry yeast per liter of water. Gently add the required volume in the must, trying to homogenize well through some mechanical method. Fermentation shall be carried out throughout the process at a temperature ranging from 12°C to 19°C. The concentration of sugar in the must shall be recorded periodically (recommended between 6, 16 or 24 hours) by physical methods such as refractometry or by chemical and spectrophotometric methods such as DNS (method of 3.5 dinitrosalicylic acid). Aeration must be stopped when the yeast achieves between 25-40 g/l of residual sugar, preferably 30 g/L.

### 4. Activation of Saccharomyces sp. strain

In case *Saccharomyces sp.* comes directly from a culture suitable for its growth as liquid or solid YM medium, YPD or another medium for yeasts culture, it must be collected by any method of decantation such as centrifugation, re-suspended and washed with a sterile solutes-free solution as many times as necessary. The pellet obtained from the last wash must be moisturized gently in sterile, demineralized and distiller water, at a temperature ranging from 30°C to 40°C, and then it stands for about 10 to 20 minutes until the use thereof.

### 5. Fermentation - Stage II

The must shall stand long enough to decant the microorganisms contained therein and the period of time recommended ranges about 18 to 24 hours. Alternatively, an agent accelerating the decanting process may be added, such as bentonite according to the proportions indicated by the manufacturer. The precipitate formed shall be removed by suction, filtration or any physical method appropriate to eliminate the existing micro-organisms (*P. anomala*) and residues originated by the must. In case said processes are not enough microfiltration should be carried out. As soon as it is finished, the aeration is stopped and it is inoculated with *Saccharomyces sp.* The yeast concentration in the must shall be greater than 0.2 g/l and less than 0.7 g/L, preferably 0.25 grams of dry yeast per liter of water. Gently add the required volume in the must, trying to homogenize well through some mechanical method.

### 6. Devatting and pressing

In the case of wine, in which fermentation is carried out in the presence of grape pomace (mainly in varieties of rose and red wines) the stage of devatting is required, wherein through treatment or mechanical operations (the use of press machine is recommended to decrease the presence of exogenous micro-organisms) grape pomace is removed from the deposits of the useful and fermented liquid.

### 7. Decanting

The wine should be micro-filtered to remove all microorganisms contained in the ferment. The use of membrane filters, where the executor must choose the most suitable one according to their conditions and volumes of product, is recommended.

### USE EXAMPLES

### Example 1

The must elaborated from Muscat of Alexandria grapes by stemming and subsequent crushing of the grapes is deposited in a fermentation vessel made of stainless steel, which was previously sterilized by moist heat.

Depending on the concentration of yeast intended to be obtained, hours before inoculation with *Pichia anomala* it is necessary to start a culture thereof in liquid medium YM (3 g/L of yeast extract, 3 g/L of malt extract, soy, 5 g/L of soy peptone, 10 g/L of glucose) for the production of biomass. Just before the use thereof, the culture must be collected by centrifugation at 5,000 RPM, re-suspended in sterile and distilled water, and washed three times. Subsequently it is gently moisturized with an alginic solution 4.5 mM, since as it is a liquid culture, a proper activation is not required, but the incubation in the presence of alginate. It stands for 20 minutes at 28°C.

The first stage of fermentation consists on aeration of the medium, which increases throughout the process to maintain a constant dissolved-oxygen concentration at 10 mg/L. At the beginning, and after 72 hours the fermentation begins, the process must be controlled every 10 hours in order to quantify the concentration of consumed sugar and the generated biomass (Figure 1). Aeration is stopped when the yeast achieves 45 g/l of residual sugar.

Once the peak of sugars is reached, aeration is stopped, and the ferment decants for 20 hours. In the meantime, a *Saccharomyces sp.* strain is activated as well as *P. anomala,* but at a temperature of 38°C. As soon as the above-specified time passes, it is necessary to remove the muddy bottom of the bottom of the fermentation vessel by opening the bottom valve thereof. It is inoculated with Saccharomyces and the process is completed in additional 50 hours under an anaerobic environment.

Since the fermentation is carried out without the presence of grape pomace, the devatting consists on a centrifugation at 5,000 RPM, during 12 minutes, and then it is micro-filtered using 0.22µm filters.

The concentration of ethanol produced at the end of the fermentation was considerably lower compared to the positive control, achieving a decrease of 53% (Figure 2).

### Example 2

The fermentation was carried out from red-grapes concentrated must. *Pichia anomala* was grown during 96 hours in a YM-glycerol medium (3g/L of yeast extract, 3g/L of malt extract, 5g/L of soy peptone, 10g/L of glucose, 5% of glycerol) for the production of biomass. Just before the use thereof, the culture must be collected by centrifugation at 5,000 RPM, re-suspended in sterile and distilled water, and washed three times. Subsequently, it is gently moisturized with an alginate solution 4,5mM. It stands for 20 minutes at 28°C.

The first stage of fermentation consists on aeration of the medium, which increases throughout the process to maintain a constant dissolved-oxygen concentration at 10 mg/L. At the beginning, and after 72 hours the fermentation begins, the process must be controlled every 10 hours in order to quantify the concentration of consumed sugar and the generated biomass (Figure 3). Aeration is stopped when the yeast achieves 32 g/l of residual sugar.

Once the peak of sugars is reached, aeration is stopped, and the ferment decants for 20 hours. In the meantime, a *Saccharomyces* sp. strain is activated as well as *P. anomala,* but at a temperature of 38°C supplemented with 1% of glycerol. As soon as the above-specified time passes, it is necessary to remove the muddy bottom of the bottom of the fermentation vessel by opening the bottom valve thereof. It is inoculated with Saccharomyces and the process is completed in additional 50 hours under an anaerobic environment.

The devatting consists on a centrifugation at 5,000 RPM, during 12 minutes, and then it is micro-filtered using 0.22µm filters.

As in Example 1, the concentration of ethanol produced at the end of the fermentation was considerably lower compared to the positive control, which in this case achieved a decrease of 40% (Figure 4).

## Claims

1. A method for preparing alcohol-reduced alcoholic beverages, **CHARACTERIZED in that**:
a) the must is inoculated with a Pichia anomala yeast strain;
b) a first oxidative stage of biomass growth is carried out; at a temperature of from 12°C to 19°C,
c) the yeast strain of stage (b) is removed, and
d) a second fermentative stage is carried out by inoculating with Saccharomyces yeasts, at a temperature of from 10°C to 17°C.

2. A method according to claim 1, **CHARACTERIZED in that** the concentration of Pichia anomala inoculum ranges from 0.1 g/L to 0.4 g/L.

3. A method according to claim 2, **CHARACTERIZED in that** the inoculum must be previously activated with an alginic solution.

4. A method according to claim 1, **CHARACTERIZED in that** the stage described in (b) corresponds to a culture with micro-oxygenation.

5. A method according to claim 4, **CHARACTERIZED in that** in the micro-oxygenation described in (b) the dissolved oxygen remains throughout the process at a concentration of 0.1 to 1 vvm.

6. A method according to claim 1, **CHARACTERIZED in that** the removal of the yeast in stage (c) is carried out by decantation.

7. A method according to claim 1, **CHARACTERIZED in that** in the stage described in (d) the concentration of Saccharomyces yeast inoculum ranges from 0.1 g/L to 0.4 g/L.

8. A method according to claim 7, **CHARACTERIZED in that** the stage described in (d) corresponds to an anaerobic culture.

9. A method according to claim 8, **CHARACTERIZED in that** the culture must be kept below 4 mg/L of dissolved oxygen.

10. A method according to claim 7, **CHARACTERIZED in that** the stage described in (d) corresponds to a fermentation of a *Saccharomyces sp.* strain.

11. A method according to claims 1 to 10, **CHARACTERIZED in that**, optionally, if the must contains grape pomace a devatting and pressing stage is carried out in order to remove grape skins.

12. A method according to claim 11, **CHARACTERIZED in that** the devatting and pressing stage is carried out by a pressing machine through mechanical action.

13. A method according to claims 1 to 12, **CHARACTERIZED in that** the resulting product is micro-filtered to remove all microorganisms contained in the ferment.

14. A method according to claim 1, **CHARACTERIZED in that** the alcohol-reduced alcoholic beverage is an ethanol-reduced wine.

## Patentansprüche

1. Ein Verfahren zur Herstellung von alkoholreduzierten alkoholischen Getränken,
**dadurch gekennzeichnet, dass**:
a) der Most mit einem Pichia-anomala-Hefestamm inokuliert wird;
b) ein erster oxidativer Schritt des Biomassewachstums durchgeführt wird; bei einer Temperatur von 12°C bis 19°C,
c) der Hefestamm aus Schritt (b) wird entfernt, und
d) ein zweiter fermentativer Schritt durch Inokulation mit Saccharomyces-Hefen bei einer Temperatur von 10°C bis 17°C durchgeführt wird.

2. Ein Verfahren nach Anspruch 1, **dadurch gekennzeichnet, dass** die Konzentration des Pichia-anomala-Inokulums im Bereich von 0,1 g/L bis 0,4 g/L liegt.

3. Ein Verfahren nach Anspruch 2, **dadurch gekennzeichnet, dass** das Inokulum zuvor mit einer Alginlösung aktiviert werden muss.

4. Ein Verfahren nach Anspruch 1, **dadurch gekennzeichnet, dass** der in (b) beschriebene Schritt einer Kultur mit Mikro-Oxygenierung entspricht.

5. Ein Verfahren nach Anspruch 4, **dadurch gekennzeichnet, dass** bei der in (b) beschriebenen Mikro-Oxygenierung der gelöste Sauerstoff während des gesamten Prozesses bei einer Konzentration von 0,1 bis 1 vvm bleibt.

6. Ein Verfahren nach Anspruch 1, **dadurch gekennzeichnet, dass** die Entfernung der Hefe in Schritt (c) durch Dekantieren durchgeführt wird.

7. Ein Verfahren nach Anspruch 1, **dadurch gekennzeichnet, dass** in dem in (d) beschriebenen Schritt die Konzentration des Saccharomyces-Hefe-Inokulums im Bereich von 0,1 g/L bis 0,4 g/L liegt.

8. Ein Verfahren nach Anspruch 7, **dadurch gekennzeichnet, dass** der in (d) beschriebene Schritt einer anaeroben Kultur entspricht.

9. Ein Verfahren nach Anspruch 8, **dadurch gekennzeichnet, dass** die Kultur unter 4 mg/L an gelöstem Sauerstoff gehalten werden muss.

10. Ein Verfahren nach Anspruch 7, **dadurch gekennzeichnet, dass** der in (d) beschriebene Schritt einer Fermentation eines *Saccharomyces-sp.*-Stammes entspricht.

11. Ein Verfahren nach einem der Ansprüche 1 bis 10, **dadurch gekennzeichnet, dass**, wenn der Most Traubentrester enthält, optional ein Abstich- und Pressschritt durchgeführt wird, um Traubenschalen zu entfernen.

12. Ein Verfahren nach Anspruch 11, **dadurch gekennzeichnet, dass** der Abstich- und Pressschritt von einer Pressmaschine durch mechanische Einwirkung durchgeführt wird.

13. Ein Verfahren nach einem der Ansprüche 1 bis 12, **dadurch gekennzeichnet, dass** das resultierende Produkt mikrofiltriert wird, um alle im Ferment enthaltenen Mikroorganismen zu entfernen.

14. Ein Verfahren nach Anspruch 1, **dadurch gekennzeichnet, dass** das alkoholreduzierte alkoholische Getränk ein ethanolreduzierter Wein ist.

## Revendications

1. Procédé pour préparer des boissons alcoolisées à taux d'alcool réduit, **CARACTÉRISÉ en ce que** :
a) le moût est inoculé avec une souche de levure *Pichia anomala* ;
b) une première étape oxydative de croissance de biomasse est effectuée ; à une température de 12 °C à 19 °C,
c) la souche de levure de l'étape (b) est enlevée, et
d) une deuxième étape de fermentation est effectuée par inoculation de levures *Saccharomyces,* à une température de 10 °C à 17 °C.

2. Procédé selon la revendication 1, **CARACTÉRISÉ en ce que** la concentration d'inoculum de *Pichia anomala* est dans la plage de 0,1 g/l à 0,4 g/l.

3. Procédé selon la revendication 2, **CARACTÉRISÉ en ce que** l'inoculum doit être activé antérieurement par une solution alginique.

4. Procédé selon la revendication 1, **CARACTÉRISÉ en ce que** l'étape décrite en (b) correspond à une culture avec micro-oxygénation.

5. Procédé selon la revendication 4, **CARACTÉRISÉ en ce que**, dans la micro-oxygénation décrite en (b), l'oxygène dissous reste à une concentration de 0,1 à 1 vvm pendant tout le processus.

6. Procédé selon la revendication 1, **CARACTÉRISÉ en ce que** l'enlèvement de la levure à l'étape (c) est effectué par décantation.

7. Procédé selon la revendication 1, **CARACTÉRISÉ en ce que**, à l'étape décrite en (d), la concentration d'inoculum de levure de *Saccharomyces* est dans la plage de 0,1 g/l à 0,4 g/l.

8. Procédé selon la revendication 7, **CARACTÉRISÉ en ce que** l'étape décrite en (d) correspond à une culture anaérobie.

9. Procédé selon la revendication 8, **CARACTÉRISÉ en ce que** le taux d'oxygène dissous de la culture doit rester inférieur à 4 mg/l.

10. Procédé selon la revendication 7, **CARACTÉRISÉ en ce que** l'étape décrite en (d) correspond à une fermentation de souche de *Saccharomyces sp.*

11. Procédé selon l'une des revendications 1 à 10, **CARACTÉRISÉ en ce que**, alternativement, si le moût contient du marc de raisin, une étape de décuvage et de pressurage est effectuée pour enlever les pellicules de raisin.

12. Procédé selon la revendication 11, **CARACTÉRISÉ en ce que** le décuvage et le pressurage sont effectués par une machine de pressurage par action mécanique.

13. Procédé selon les revendications 1 à 12, **CARACTÉRISÉ en ce que** le produit résultant est micro-filtré pour enlever tous les micro-organismes contenus dans le ferment.

14. Procédé selon la revendication 1, **CARACTÉRISÉ en ce que** la boisson alcoolisée à taux d'alcool réduit est un vin à éthanol réduit.
